# EUROPÄISCHE PATENTANMELDUNG

(11) **EP 1 585 213 A1**
(43) Veröffentlichungstag der Anmeldung: **12.10.2005**
(21) Anmeldenummer: 04405209.0
(22) Anmeldetag: 06.04.2004
(51) Int. Cl.: H02K 37/06, B60H 1/00

(54) **Einstellvorrichtung mit einem Antrieb**

(71) Anmelder: SAIA-Burgess Murten AG, 3280 Murten (CH)
(72) Erfinder: Bourqui, Yvan, 1720 Corminboeuf (CH)
(74) Vertreter: Seehof, Michel

(57) **Zusammenfassung**

Die Einstellvorrichtung zur Einstellung einer beweglichen Komponente (30, 31) eines Kraftfahrzeuges umfasst einen Reluktanzschrittmotor als Antrieb (41). Sie dient insbesondere zur Einstellung einer Klappe in der Heizungs-Lüftungs- und/oder Klimaanlage.

## Beschreibung

Die Erfindung bezieht sich auf eine Einstellvorrichtung mit einem Antrieb gemäss Oberbegriff des Anspruchs 1, eine Luftmischeinrichtung mit einer derartigen Einstellvorrichtung und eine Verwendung von einer derartigen Einstellvorrichtung.

Einstellvorrichtungen der eingangs erwähnten Art werden beispielsweise in Kraftfahrzeugen zur Steuerung der Luftströme in einer Klimaanlage verwendet. So weist diese z.B. eine Mischluftklappe auf, welche mittels der Einstellvorrichtung verschwenkbar ist, um die gewünschte Mischung aus Kalt- und Warmluft einstellen zu können. Es ist bekannt, als Antrieb für solche Einstellvorrichtungen Schrittmotoren mit Permanentmagneten einzusetzen.

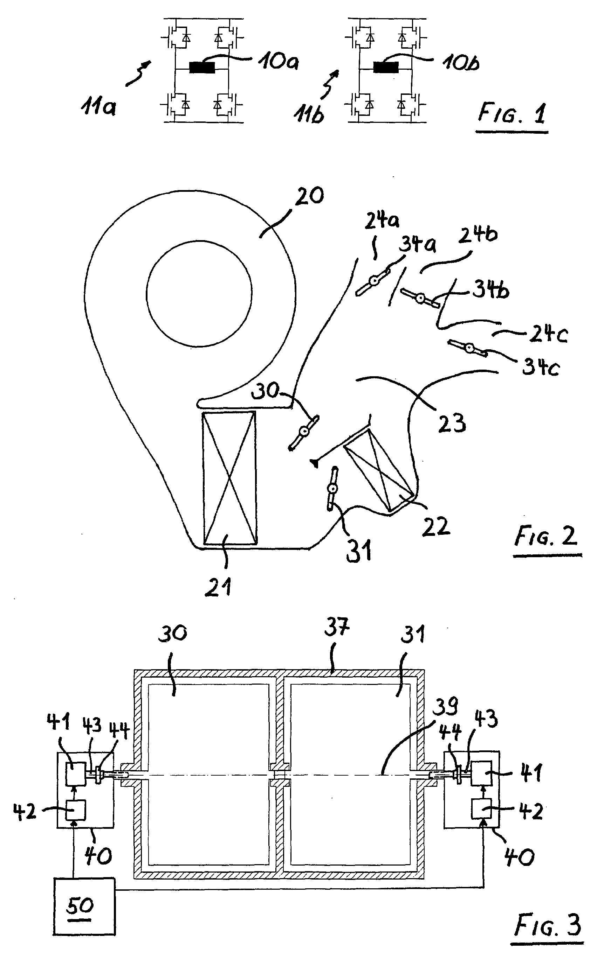

Die Steuerung von solchen bekannten Schrittmotoren bedingt eine elektronische Steuerschaltung, mit welcher geeignete Impulse erzeugbar sind. Fig. 1 zeigt ein Beispiel einer bekannten Steuerschaltung zur Ansteuerung eines bipolaren Schrittmotors. Die jeweilige Wicklung 10a, 10b ist mit einer H-Brücke 11a bzw. 11b verbunden, die vier Transistoren aufweist. Beim Betrieb werden die einzelnen Transistoren geöffnet bzw. gesperrt, sodass die Wicklungen 10a und 10b zeitlich koordiniert bestromt werden und der Rotor in Drehung versetzt wird. Derartige elektronische Steuerschaltungen sind aber relativ komplex und teuer in der Herstellung.

Nachteilig an den bekannten Schrittmotoren ist auch, dass die zur Herstellung benötigten Permanentmagnete relativ teure und empfindliche Komponenten darstellen. Es wurde festgestellt, dass insbesondere die Qualität der Permanentmagnete für eine fehlerfreie Produktion von Schrittmotoren entscheidend ist. Hohe Qualitätsanforderungen führen jedoch zu entsprechend hohen Herstellungskosten.

Ausgehend von diesem Stand der Technik ist es Aufgabe der vorliegenden Erfindung, eine Einstellvorrichtung mit einem Antrieb anzugeben, die kostengünstig und möglichst einfach in der Herstellung ist, aber dennoch zuverlässig im Betrieb ist.

Diese Aufgabe wird durch eine erfindungsgemässe Einstellvorrichtung gemäss Anspruch 1 gelöst. Die weiteren Ansprüche geben bevorzugte Ausführungen sowie eine Luftmischeinrichtung mit einer erfindungsgemässen Einstellvorrichtung bzw. eine Verwendung der erfindungsgemässen Einstellvorrichtung an.

Die Erfindung wird im Folgenden anhand von bevorzugten Ausführungsbeispielen unter Bezugnahme auf Figuren erläutert. Es zeigen
Fig. 1 eine bekannte elektronische Steuerschaltung zur Ansteuerung eines bipolaren Schrittmotors;
Fig. 2 schematisch eine Klimaanlage eines Kraftfahrzeuges, für welche die erfindungsgemässe Einstellvorrichtung verwendbar ist;
Fig. 3 schematisch einen Querschnitt durch das Gehäuse einer Klimaanlage;
Fig. 4 eine Explosionsansicht eines Antriebs der erfindungsgemässen Einstellvorrichtung;
Fig. 5 eine perspektivische Ansicht eines Statorpakets für den Antrieb gemäss Fig. 4; und
Fig. 6 eine elektronische Steuereinrichtung zur Ansteuerung des Antriebs gemäss Fig. 4.

Fig. 2 zeigt schematisch eine Klimaanlage in einem Kraftfahrzeug. Sie umfasst ein Radialgebläse 20, mittels welchem Aussenluft angesaugt und via einen Filter zum Verdampfer 21 befördert werden kann. Dieser dient zum Abkühlen und Entfeuchten der angesaugten Luft. Weiter weist die Klimaanlage einen Heizkörper 22 auf zum Erwärmen der durchströmenden Luft sowie eine Mischungszone 23, in welcher Kaltluft vom Verdampfer 21 und Warmluft vom Heizkörper 22 gemischt werden. Am Ende der Klimaanlage sind verschiedene Auslässe 24a, 24b, 24c vorhanden, durch welche die gemischte Luft schliesslich in das Fahrzeuginnere gelangen kann. Auslass 24a beispielsweise führt zur Windschutzscheibe, Auslass 24b zu den Mitteldüsen und Auslass 24c in den Fussraum.

In der in Fig. 2 gezeigten Klimaanlage befindet sich zwischen dem Verdampfer 21 und der Mischungszone 23 eine erste Klappe 30 sowie zwischen dem Verdampfer 21 und dem Heizkörper 22 eine zweite Klappe 31. Die Klappen 30, 31 sind beweglich gelagert, sodass durch ein entsprechendes Verstellen der Luftstrom zur Mischungszone 23 bzw. zum Heizkörper 22 reguliert und so Kalt- und Warmluft in der Mischungszone 23 in gewünschter Art und Weise gemischt werden können. Zur gesteuerten Einstellung der Klappen 30, 31 dient eine Einstellvorrichtung mit einem Antrieb. Die Auslässe 24a, 24b und 24c sind ebenfalls mit Klappen 34a, 34b bzw. 34c versehen, die jedoch in der Regel manuell betätigbar sind.

Fig. 3 zeigt schematisch einen Querschnitt durch das Gehäuse 37 der Klimaanlage mit den beiden Klappen 30, 31, die jeweils mit einer Einstellvorrichtung 40 verbunden sind. Die linke Kammer führt beispielsweise zur Mischungszone 23, die rechte Kammer zum Heizkörper 22. (Der besseren Darstellung wegen sind in Fig. 2 die Achsen, um welche die Klappe 30, 31 drehbar gelagert sind, senkrecht zur Blattebene eingezeichnet, während sie in Fig. 3 auf einer Linie 39 liegen.) Die Einstellvorrichtung 40 dient als Aktuator und umfasst einen Antrieb 41, der mittels einer Steuereinrichtung 42 angesteuert werden kann. Der Antrieb 41 weist eine Welle 43 auf, die mittels Getriebe 44, z.B. in Form von Zahnrädern und/oder in Form eines Wellgetriebes, wie es nachfolgend beschrieben ist, mit der beweglichen Klappe 30 bzw. 31 verbunden ist. Es ist weiter eine zentrale Steuereinheit 50 vorgesehen, um Steuersignale an die Steuereinrichtungen 42 zu übermitteln und so die Stellung der Klappen 30, 31 in Abhängigkeit von Sensordaten regeln zu können.

Als Antrieb 41 ist ein Reluktanzschrittmotor vorgesehen. Rotor und Stator von Reluktanzschrittmotoren haben keine Permanentmagnete und leiten einen magnetischen Fluss besonders gut. Die einzelnen Wicklungen des Stators werden aufeinanderfolgend bestromt, sodass der Rotor jeweils zu einer Position gezogen wird, in welcher der magnetische Widerstand ("Reluktanz") am geringsten ist. Ohne Ansteuerung der einzelnen Wicklungen des Stators kann sich der Rotor frei drehen, d.h., dass im stromlosen Zustand ist nahezu kein Rastmoment vorhanden ist.

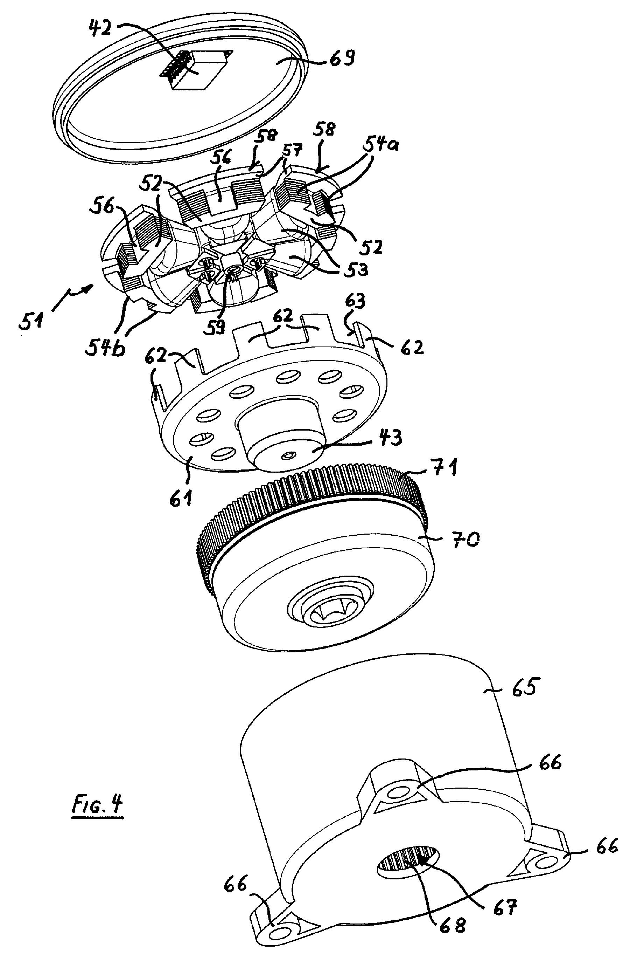

Fig. 4 zeigt eine mögliche Ausführungsform eines Reluktanzschrittmotors, der zur Einstellung der Klappen 30, 31 geeignet ist. Der Reluktanzschrittmotor umfasst einen Stator 51, einen Rotor 61 und ein Aufnahmegehäuse 65 mit einem Gehäusedeckel 69. Der Stator 51 umfasst ein Paket mit mehreren Armen 52, wobei die Arme sich paarweise gegenüberstehen. Die einzelnen Arme 52 des Stators 51 sind mit Wicklungen 53 versehen. Zum Antreiben des Rotors 61 werden die beiden Wicklungen 53, welche auf derselben Achse liegen, gleichzeitig bestromt, sodass an dem einen Armende des Stators 51, z.B. Armende 54a, ein Nordpol erzeugt wird und am gegenüberliegenden Armende, z.B. 54b, ein Südpol.

In Fig. 4 ist eine Ausführungsform eines dreiphasigen Reluktanzschrittmotors gezeigt, der Stator 51 ist demnach sechsarmig. Zur Verdoppelung der Statorpole sind die jeweiligen Armenden 54a, 54b des Stators 51 in der Mitte 56 abgestuft ausgebildet. Der Reluktanzschrittmotor gemäss Fig. 4 weist demnach 12 Statorpole auf. Ausführungsformen mit mehr als drei Phasen sind ebenfalls denkbar, z.B. solche mit vier Phasen (entsprechend einem achtarmigen Stator).

Die Armenden 54a, 54b des Stators 51 sind jeweils mit einer hervorspringenden Halterung 57 versehen. Die äusseren Kanten 58 der Halterungen 57 liegen auf einem Kreis, dessen Durchmesser etwas grösser als der äussere Durchmesser des Rotors 61 ist. Die Halterungen 57 dienen zur Fixation des Stators 51 im Aufnahmegehäuse 65. In der Mitte des Stators 51 befindet sich eine Vertiefung 59 zur drehbaren Lagerung des Rotors 61.

Der Rotor 61 ist als Aussenläufer mit mehreren Zähnen 62 ausgebildet, die gleichmässig verteilt an der Peripherie des Rotors 61 angeordnet sind. Je nach Schrittwinkel, mit welchem der Rotor 61 minimal bewegbar sein soll, kann die jeweilige Anzahl der Statorarme 52 sowie der Rotorzähne 62 angepasst sein. Im Beispiel gemäss Fig. 4 weist der Rotor 61 zehn Zähne 62 und der Stator 51 zwölf Statorpole auf, sodass sich ein Schrittwinkel von 12 Grad ergibt. (Ein grösserer Schrittwinkel von 30 Grad ergibt sich, wenn z.B. der Rotor nur vier Zähne und der Stator sechs Statorpole umfasst.)

Die Rotorzähne 62 sind im Wesentlichen parallel zur Rotationsachse des Rotors 61 ausgerichtet. Somit liegen die Innenseiten 63 der Rotorzähne 62 und die Statorpole 54a, 54b des Stators 51 auf Flächen, die im Wesentlichen zylindrisch sind und einen möglichst geringen Zwischenraum aufweisen. Dadurch wird gewährleistet, dass sich bei der Bestromung der magnetische Kreis via Rotor 61 und Stator 51 möglichst optimal schliessen kann. Im Weiteren hat die Ausbildung des Rotors 61 als Aussenläufer anstelle eines Innenläufers den Vorteil, dass die Statorpole gut von aussen zugänglich sind und dass das Anbringen der Wicklungen 53 erleichtert ist.

Wie Fig. 4 weiter zeigt, weist der Rotor 61 in der Mitte eine Antriebswelle 43 auf, wobei Rotor 61 und Antriebswelle 43 als einstückiges Teil ausgebildet sind. Der Reluktanzschrittmotor umfasst ein Abrollrad 70, welches zusammen mit der Antriebswelle 43 und dem Aufnahmegehäuse 65 ein Wellgetriebe 44 bildet (im Englischen "harmonic drive" oder "wave drive" genannt).

Das Abrollrad 70 weist eine Aussenverzahnung 71 mit einer bestimmten Anzahl Zähne, Z1, auf. Es ist in seiner Grundform zylindrisch, jedoch radial flexibel ausgebildet. Zur Kraftübertragung ist das Abrollrad 70 mit der zu bewegenden Komponente 30, 31 verbindbar.

Das Aufnahmegehäuse 65 weist eine Innenverzahnung 68 mit einer bestimmten Anzahl Zähne, Z2, auf und bildet den feststehenden Stützring des Wellgetriebes 44. Z2 ist grösser als Z1; demnach ist die Umfangslänge der Aussenverzahnung 71 kleiner als die Umfangslänge der Innenverzahnung 68. Die Antriebswelle 43, welche drehbar im Abrollrad 70 angeordnet ist, weist eine elliptische Form auf und bildet das Antriebselement des Wellgetriebes 44.

Bei der Rotation des Rotors 61 wird das Abrollrad 70 aufgrund der elliptischen Form der Antriebswelle 43 laufend deformiert, sodass jeweils diametral gegenüberliegende Zähne des Abrollrades 70 nacheinander mit den Zähnen der Innenverzahnung 68 in Eingriff gebracht werden.

Da Z1 < Z2, dreht das Abrollrad 70 langsamer als der Rotor 61; das Wellgetriebe funktioniert demnach als Untersetzungsgetriebe. Bereits eine kleine Differenz in der Zähneanzahl Z1 und Z2 reicht aus, um hohe Untersetzungsverhältnisse zu erreichen, beispielsweise 1:50 für Z1 = 98 und Z2 = 100.

Der Reluktanzschrittmotor weist im stromlosen Zustand kein Haltemoment auf. Das Wellgetriebe 44 hat den Vorteil, dass es als Sperrgetriebe funktioniert, sodass ein auf das Abrollrad 70 ausgeübtes Drehmoment den Rotor 61 nicht zu drehen vermag. Es ist demnach gewährleistet, dass insbesondere in der Ruhestellung der zu bewegenden Komponenten 30, 31 eine Kraftübertragung auf die Antriebswelle 43 nicht möglich ist und so die Winkellage des Rotors 61 unverändert bleibt.

Wird zur Kraftübertragung vom Reluktanzschrittmotor auf die zu bewegenden Komponenten 30, 31 ein anderes Getriebe als ein Sperrgetriebe verwendet, so ist es denkbar, mittels der Steuereinrichtung 42 den Reluktanzschrittmotor so anzusteuern, dass der Rotor 61 ein Haltemoment erzeugt und dieser zusammen mit der beweglichen Komponente 30, 31 in einer im Wesentlichen ruhenden Stellung gehalten werden kann.

Gemäss Fig. 4 ist das Aufnahmegehäuse 65 an der Peripherie mit Halterungen 66 versehen zur Fixation auf einer Montagefläche. Das Aufnahmegehäuse 65 weist in der Mitte eine Öffnung 67 auf, durch welche hindurch das Abrollrad 70 mit der zu bewegenden Komponente 30, 31 in Wirkverbindung gebracht werden kann. Die Steuereinrichtung 42 ist am Gehäusedeckel 69 angebracht.

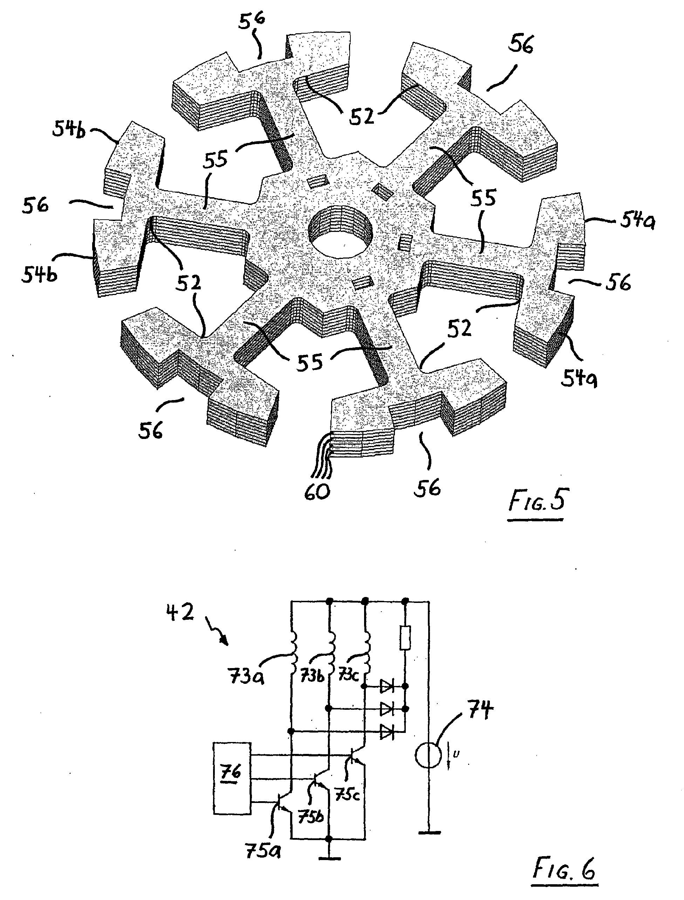

Zur Herstellung des Statorpakets des Stators 51 sowie des Rotors 61 eignet sich weichmagnetisches Material (Material, welches den magnetischen Fluss gut leitet), z.B. Weicheisen. Wie Fig. 5 zeigt, setzt sich das Statorpaket aus mehreren Statorblechen 60 zusammen, die zur Herstellung aus dem weichmagnetischen Material ausgestanzt, übereinandergelegt und dann fest verbunden werden. Das Statorpaket wird dann mit Kunststoff versehen. Dabei werden einerseits die Halterungen 57 gebildet und andererseits werden die Mittelteile 55 der Statorarme 51 mit dem Kunststoff umspritzt, sodass insbesondere die Kanten der Mittelteile 55 abgedeckt und runde Flächen gebildet werden. Die Drähte für die Wicklungen 53, beispielsweise Kupferdrähte, werden dann um die Mittelteile 55 gewickelt, wobei die durch den Kunststoff gebildeten runden Flächen verhindern, dass die Kanten der Statorbleche 60 die Drähte beschädigen können.

Der Rotor 61 ist vorzugsweise einstückig aus dem weichmagnetischen Material hergestellt durch Ausstanzen aus einem Blech und Biegen der Zähne 62. Die Antriebswelle 43 wird durch Tiefziehen des Bleches geformt. Es ist auch denkbar, die Antriebswelle 43 durch Spritzgiessen von Kunststoff an das Rotorteil 61 anzuformen.

Zum Zusammensetzen des Reluktanzschrittmotors wird der Rotor 61 auf den Stator 51 gesetzt und die beiden Komponenten zusammen mit dem Abrollrad 70 in das Aufnahmegehäuse 65 eingefügt, wobei der Stator 51 durch die Halterungen 57 an der Innenwand des Aufnahmegehäuses 65 festgeklemmt wird. Schliesslich wird der Gehäusedeckel 69 auf das Aufnahmegehäuse 65 gedrückt.

Fig. 6 zeigt eine Ausführungsform der Steuereinrichtung 42 zur Ansteuerung des Reluktanzschrittmotors. Der Einfachheit halber bezeichnet das Symbol für die Spule 73a, 73b, 73c jeweils die beiden Wicklungen 53, welche auf derselben Achse liegen. Die drei Spulen 73a, 73b, 73c sind parallel zueinander geschaltet und sind jeweils mit einer Spannungsquelle 74 verbunden bzw. über einen Transistor 75a, 75b bzw. 75c an Masse angeschlossen. Die Transistoren 75a, 75b, 75c werden von einer Steuereinheit 76 angesteuert, welche einen Mikroprozessor oder dergleichen umfasst. Mit dieser sind Steuersignale erzeugbar, sodass die Transistoren 75a, 75b, 75c aufeinanderfolgend geöffnet werden und ein Strom durch die entsprechende Spule 73a, 73b, 73c fliesst. Die Drehrichtung des Rotors 61 ist durch die zeitliche Reihenfolge, in welcher die Transistoren 75a, 75b, 75c geöffnet werden, gegeben (entweder gemäss dem Schema 75a-75b-75c-75a-etc. oder gemäss dem Schema 75c-75b-75a-75c-etc.). Bei vorgegebenem Schrittwinkel ergibt sich der Winkel, um welchen der Rotor 61 gedreht wird, aus der Anzahl Schaltschritte. Z.B. beträgt der Schrittwinkel für die in der Fig. 4 gezeigten Ausführungsform 12 Grad. Werden die Spulen 73a, 73b, 73c beispielsweise genau einmal nacheinander bestromt, hat sich der Rotor 61 um 36 Grad gedreht. Die von Steuereinrichtung 42 erzeugten Steuersignale erlauben es demnach, den Rotor 61 um einen bestimmten positiven oder negativen Winkel zu drehen. Durch die Untersetzung des Getriebes 44 ist der Winkel entsprechend reduziert, um welchen die bewegliche Komponente 30, 31 verschwenkt wird.

Zur Reduktion der vom Reluktanzschrittmotor erzeugten Vibrationen sind vorzugsweise mittels der Steuereinrichtung 42 Steuersignale erzeugbar, so dass der Strom, welcher innerhalb eines Schrittes durch eine Spule, z.B. 73a, fliesst, nicht konstant ist, sondern zeitlich variiert. Dazu ist die Steuereinrichtung 42 derart gestaltet, dass sie die Erzeugung von Impulsen beispielsweise durch Pulsbreitenmodulation ermöglicht, sodass der Transistor derjenigen Spule, z.B. 73a, durch welche der Strom fliessen soll, innerhalb eines Schrittes mehrmals ein- und ausgeschaltet werden kann. Durch Variieren der relativen Einschaltdauer kann entsprechend der zeitliche Verlauf des Strompegels verändert werden. Eine sinusförmige Variation des Stromes hat sich als besonders vorteilhaft erwiesen, um ein möglichst konstantes elektromagnetisches Drehmoment zu erzeugen und um einen sehr runden Lauf des Rotors 61 zu gewährleisten.

Die Einstellvorrichtung 40 mit einem Reluktanzschrittmotor als Antrieb weist u.a. folgende Vorteile auf:
- Der Antrieb 41 weist einen einfachen und kompakten Aufbau auf. Er ist kostengünstig herstellbar und garantiert eine zuverlässige Funktionsweise. So ist er u.a. frei von relativ teuren und störanfälligen Permanentmagneten im Gegensatz zu den bisher für Einstellvorrichtungen verwendeten Schrittmotoren. Zur Herstellung des Rotors 61 reicht z.B. ein Blech aus Weicheisen.
- Das Getriebe 44 ist im Gehäuse 65 des Antriebs 41 integriert und in Form eines Wellgetriebes ermöglicht es eine grosse Untersetzung, wobei es in Rückwärtsrichtung selbsthemmend wirkt.
- Die Steuereinrichtung 42 zur Ansteuerung des Antriebs 41 ist vereinfacht gegenüber der Steuerschaltung gemäss Fig. 1. So weist die Steuereinrichtung 42 gemäss Fig. 6 lediglich drei Transistoren 75a, 75b, 75c auf, während die Steuerschaltung gemäss Fig. 1 acht Transistoren benötigt.

Die Einstellvorrichtung 40 wird besonders vorteilhaft in einer Luftmischeinrichtung in einer Heizungs-, Lüftungs- und/oder Klimaanlage eines Kraftfahrzeuges zur Einstellung von Klappen verwendet wie Mischluftklappen 30, 31 zur Mischung von Warm- und Kaltluft, Filterklappen, Klappen zur Umstellung von Frischluft auf Umluft, etc. Die Einstellvorrichtung 40 kann aber auch zur Einstellung von anderen beweglichen Komponenten eines Kraftfahrzeuges verwendet werden. Beispiele von solchen Komponenten sind: Sitz, Spiegel, Fenster, Display z.B. eines Navigationssystems.

## Patentansprüche

1. Einstellvorrichtung mit einem Antrieb zur Einstellung einer beweglichen Komponente (30, 31) eines Kraftfahrzeuges, insbesondere einer Klappe in der Heizungs-, Lüftungs- und/oder Klimaanlage, **dadurch gekennzeichnet, dass** der Antrieb (41) einen Reluktanzschrittmotor umfasst.

2. Einstellvorrichtung nach Anspruch 1, **gekennzeichnet durch** eine Steuereinrichtung (42), mittels welcher Steuersignale zum Bestromen des Reluktanzschrittmotors erzeugbar sind, sodass der Rotor (61) des Reluktanzschrittmotors um einen bestimmten positiven oder negativen Winkel drehbar ist.

3. Einstellvorrichtung nach einem der Ansprüche 1 bis 2, **gekennzeichnet durch** ein mit dem Reluktanzschrittmotor verbundenes Sperrgetriebe (44) zur Verhinderung einer Kraftübertragung von der beweglichen Komponente (30, 31) auf den Reluktanzschrittmotor.

4. Einstellvorrichtung nach Anspruch 3, **dadurch gekennzeichnet, dass** das Sperrgetriebe ein Wellgetriebe (43, 68, 70) ist.

5. Einstellvorrichtung nach einem der Ansprüche 1 bis 4, **dadurch gekennzeichnet, dass** der Stator (51) des Reluktanzschrittmotors ein Paket aus mehreren Statorblechen (60) umfasst, wobei das Paket mehrere Arme (52) aufweist, welche mit Wicklungen (53) versehen sind.

6. Einstellvorrichtung nach einem der Ansprüche 1 bis 5, **dadurch gekennzeichnet, dass** der Stator (51) Halterungen (58) umfasst zum Festklemmen in einem Gehäuse (65).

7. Einstellvorrichtung nach einem der Ansprüche 1 bis 6, **dadurch gekennzeichnet, dass** der Rotor (61) des Reluktanzschrittmotors ein Aussenläufer ist, der mehrere Zähne (62) aufweist.

8. Einstellvorrichtung nach einem der Ansprüche 1 bis 7, **dadurch gekennzeichnet, dass** der Rotor (61) des Reluktanzschrittmotors als einstückiges Teil mit einer Antriebswelle (43) ausgebildet ist.

9. Einstellvorrichtung nach einem der Ansprüche 1 bis 8, **gekennzeichnet durch** eine Steuereinrichtung (42) zur Erzeugung von Impulsen, mittels welchen die Bestromung des Reluktanzschrittmotors innerhalb eines Schrittes zeitlich variierbar ist.

10. Luftmischeinrichtung für eine Heizungs-, Lüftungs- und/oder Klimaanlage eines Kraftfahrzeuges mit einer Einstellvorrichtung nach einem der Ansprüche 1 bis 9 und einer damit in Wirkverbindung stehenden Klappe (30, 31).

11. Verwendung einer Einstellvorrichtung nach einem der Ansprüche 1 bis 9 zur Einstellung von wenigstens einer der folgenden Komponenten eines Kraftfahrzeuges: Klappe in einer Heizungs-, Lüftungs- und/oder Klimaanlage, Sitz, Spiegel, Fenster, Display.
